Europäisches Patentamt

European Patent Office

Office européen des brevets

(11) Veröffentlichungsnummer: **0 271 930**
A2

# (12) EUROPÄISCHE PATENTANMELDUNG

(21) Anmeldenummer: **87118891.8**

(22) Anmeldetag: **19.12.87**

(51) Int. Cl.4: **B62D 1/06** , B60R 16/02

(30) Priorität: **19.12.86 DE 3643398**

(43) Veröffentlichungstag der Anmeldung:
**22.06.88 Patentblatt 88/25**

(84) Benannte Vertragsstaaten:
**AT CH DE FR GB IT LI NL SE**

(71) Anmelder: **Scheuerer, Michael**
**Spielgartenweg 14**
**D-8075 Vohburg(DE)**

(72) Erfinder: **Scheuerer, Michael**
**Spielgartenweg 14**
**D-8075 Vohburg(DE)**
Erfinder: **Schmidt, Hermann-Josef**
**Angermühle 5,**
**D-8074 Gaimersheim(DE)**

(74) Vertreter: **Neubauer, Hans-Jürgen, Dipl.-Phys.**
**Fauststrasse 30**
**D-8070 Ingolstadt(DE)**

(54) **Lenkrad mit elektrischer Beheizung.**

(57) Lenkräder von Kraftfahrzeugen sind in den ersten Minuten der Benutzung für empfindliche Fahrer zu kalt und unangenehm. Außerdem verschlechtert sich das Dämpfungsverhalten beim Körperaufschlag bei bestimmten Werkstoffen. In der Lenkradkranz-Ummantelung integrierte Heizungsdrähte sollen bei Schluß des Stromkreises die Objekttemperaturen kurzfristig erhöhen.

PTFE-isolierte Cu-Heizdrähte, deren elektrische Energiezufuhr über (Hupen) Schliefringe bzw. -Kohle erfolgt, werden dicht unter der Oberfläche in die Lenkradkranz-Mantelwerkstoffe eingelagert. Einfache Ein-und Ausschalter oder elektronische Zeitschaltuhr erlauben eine befristete Funktionsdauer während des Fahrzeugbetriebes.

Fig.1

## Lenkrad mit elektrischer Beheizung

Die Erfindung betrifft eine Vorrichtung zum elektrischen Heizen von Lenkrädern im Bereich des Lenkradkranzes über dessen gesamten Umfang. Die Heizung besteht aus metallischen Heizleitern, die dicht unter der Oberfläche der Lenkradkranz-Ummantelung angeordnet sind und durch entsprechende Zuleitungen von der elektrischen Versorgungsanlage des Fahrzeugs, z.B. über den Hupenschleifring, gespeist wird.

Bekannte Lenkräder bestehen aus Nabe, Speichen und Lenkradkranz aus den Werkstoffen: Stahl, Aluminium und Kunststoff.

Der Lenkradkranz ist ummantelt mit verschiedenen Werkstoffen, unterschiedlicher Härte bzw. Elastizität. Die Umhüllung des Lenkradkranz-Kerns kann durch Spritzguß, Reaktionsspritzguß u. ä. gefertigt werden. Als letzte Hülle kann Echtleder aufgespannt sein.

Bekannte Lenkradkranz-Ummantelungen aus synthetischen Werkstoffen nehmen die jeweilige Umgebungstemperatur an und fühlen sich bei tiefen Temperaturen kalt an. Dadurch, daß die organischen Werkstoffe relativ schlechte Wärmeleiter darstellen, kann die Erhöhung der Objekttemperatur unter Umständen sehr lange dauern. Sensible Fahrer können dies als unangenehm empfinden, außerdem verschlechtert sich das Dämpfungsverhal ten beim Körperaufprall im Falle eines Umfalls gleich nach dem Kaltstart.

Der Erfindung liegt die Aufgabe zugrunde, ein Lenkrad mit elektrischer Beheizung zu schaffen, wobei diese Beheizung einfach und kostengünstig hergestellt werden kann.

Diese Aufgabe wird mit den Kennzeichen des Anspruchs 1 gelöst.

Der Heizleiter wird am Umfang des Lenkradkerns angebracht und unter der Oberfläche eines Ummantelungsmaterials eingebettet.

Die Stromzuführung wird zweckmäßig über einen Schleifring, z. B. den Hupenschleifring, durchgeführt.

Eine vorteilhafte Ausführung des Lenkrads wird dadurch erhalten, daß die bevorzugt mit Polytetrafluorethylen isolierten Heizleiter auf einem Elastomerband bestimmter Breite und dem Umfang des Lenkradkranzes entsprechender Länge fixiert und vor dessen Ummantelung mit dem selbstklebenden Band auf dem Lenkradkranz geklebt werden. Besonders vorteilhaft wird ein doppelstückig klebendes Band verwendet, an dessen einer Klebeseite der Heizleiter gehalten ist und mit dessen anderer Klebeseite das Band am Lenkradkern vor der Umschäumung fixiert werden kann. Das Band wird zweckmäßig mit dem einseitig aufgebrachten Heizleiter zur Lenkradherstellung angeliefert.

Die Dicke des Elastomerbandes richtet sich danach, in welcher Entfernung der Heizleiter von der Oberfläche des Lenkradkranzes im Mantel-Werkstoff eingebettet werden soll bzw. wie tief der Heizdraht unter der Manteloberfläche angeordnet ist. Dies richtet sich wiederum nach der Zusammensetzung des organischen Ummantelungsstoffes.

Vorzugsweise besteht das Elastomerband aus einem geschäumten Trägerwerkstoff (z. B. PUR) mit beidseitigen Selbstklebeschichten ("doppelseitiges Schaumklebeband). Die Breite des Bandes richtet sich nach dem Rohr-Durchmesser des Lenkradkranzes, die Länge nach dessen Rad-Umfang. Das Klebeband ist einseitig mit siliconisiertem Papier abgedeckt und kann als Rollenware zum Auftrag des Heizleiters herangezogen werden.

Der Heizleiter, dessen Querschnitt und Länge sich nach den elektrischen Daten der Stromversorgungsanlage des Fahrzeuges und nach den Abmessungen und dem Werkstoff des jeweiligen Lenkradkranzes richtet, besteht vorzugsweise aus weichgeglühtem Kupferdraht bzw. aus einer mehradrigen Litze. Die Isolierung besteht aus wärmeformbeständigen Kunststoff, vorzugsweise aus PTFE.

Der Heizdraht wird in sinusähnliche Wellenlinien auf die dem Abdeckpapier gegenüberliegende freie Sicht des Klebebandes aufgebracht. Dies ist manuell sowie maschinell möglich. Die Enden des Phasenleiters und der Masseleitung sind längenmäßig so zu gestalten, daß eine Verlötung derselben mit Litzensträngen größeren Leiterquerschnittes möglich ist. Diese Zuleitungen sind mit Silikonelastomer isoliert und stellen die Zuleitungen zum Ein-und Ausschalter bzw. zum Masseanschluß dar. Diese Litzenden sind mit geeigneten Steckern (Flach-, Rundstecker) versehen.

Das Schaltergehäuse zum Einclipsen des Schalters wird in eine Speiche integriert (vom Fahrer abgewandt auf der Rückseite), in einem Abstand von max. 50 mm, vom äußeren Rand der Ummantelung radial in Richtung Nabenmitte.

Um das Heizleiterträgerband auf dem Lenkradkranz wunschgemäß positionieren zu können, ist dieser zweckmäßig in Schablonen einzulegen. Nachdem das Heizleiterträgerband auf dem Lenkradkranz fixiert und die Zuleitungsstränge an der Speiche positioniert sind, kann der Lenkradkern in das Werkzeug eingelegt und z. B. umschäumt werden.

Die Erfindung ist in der Zeichnung beispielsweise veranschaulicht und im nachstehenden im einzelnen anhand der Zeichnung beschrieben. Es zeigen:

Fig. 1 einen Schnitt durch ein Lenkrad im Bereich der Speiche, mit quergeschnittenem Lenkradkranz;

Fig. 2 eine Draufsicht auf das Heizleiterträgerband;

Fig. 3 einen Querschnitt durch Lenkradkranz und Ummantelung;

Fig. 4 einen Schnitt durch ein doppelseitiges Klebeband mit geschnittenen Heizleitern.

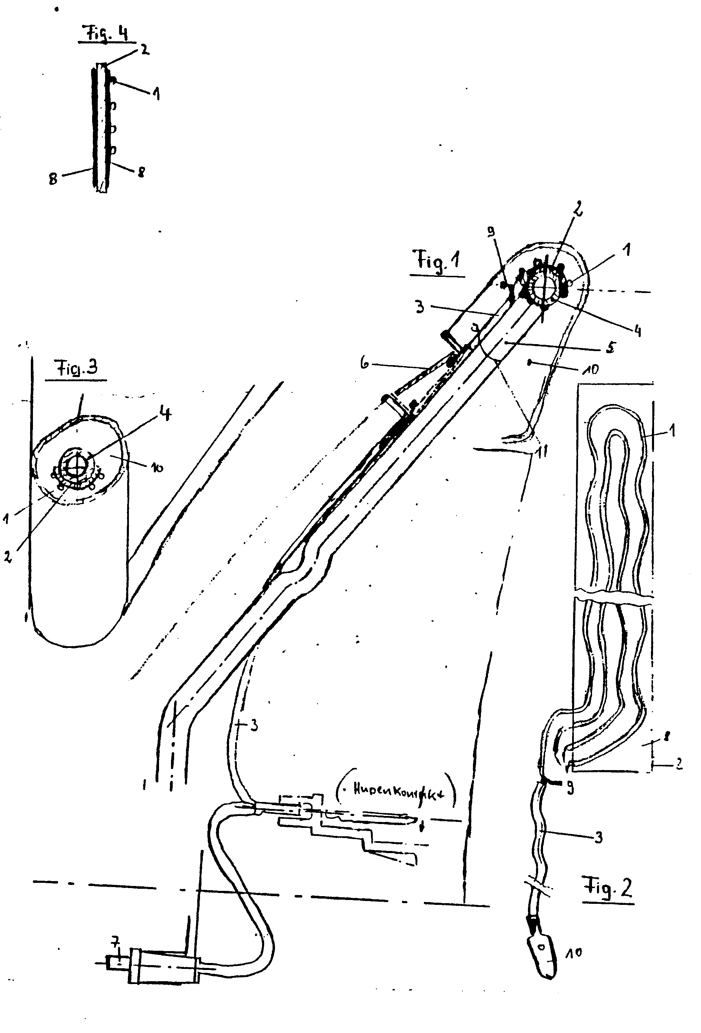

Nach Fig. 1 der Zeichnung besteht die Lenkradheizung aus dem Heizleiter 1, dem doppelseitigen Klebeband 2 und den Silikonelastomer isolierten Zuleitungen 3.

Das Lenkradkranz-Rohr 4 ist nicht vollständig mit dem Klebeband 2 bedeckt, um gute Verankerung mit dem Mantelwerk stoff 10 zu erreichen. An der Speiche 5 ist die Zuleitung vor dem Einlegen in das Werkzeug fixiert 11.

Ein-und Ausschalter 6 (symbolisch) zur Unterbrechung der Stromzuführung.

Fig. 2 veranschaulicht die leicht wellenförmige Verlegung auf dem Klebefilm 8 des Elastomerträgerbandes 2. Die Lötstelle 9 stellt die Verbindung dar zwischen Heizleiter 1 und Zuführung 3, Flachstecker 10 stellt einem möglichen Anschluß zum Schalter 6 dar.

Fig. 3 stellt einen weiteren Schnitt des ummantelten 10, Lenkradrohres 4 mit Klebeband 2 und Heizleitern 1 dar.

Fig. 4 stellt einen Schnitt durch den Schaumträger 2 ( z. B. PUR) mit beidseitiger Klebeschicht 8 und Heizdraht 1 dar.

## Ansprüche

1. Lenkrad mit elektrischer Beheizung für Fahrzeuge, insbesondere für Kraftfahrzeuge,
dadurch gekennzeichnet,
daß zur Beheizung am Umfang des Lenkrades wenigstens ein elektrischer Heizleiter (1) angebracht ist.

2. Lenkrad nach Anspruch 1, dadurch gekennzeichnet, daß der Heizleiter (1) unter der Oberfläche eines um den Lenkradkern geschäumten Werkstoffs eingebettet ist.

3. Lenkrad nach einem der Ansprüche 1 oder 2, dadurch gekennzeichnet, daß die Stromzuführung über einen Schleifring entsprechend einem Hupenschleifring erfolgt.

4. Lenkrad nach einem der Ansprüche 1 bis 3, dadurch gekennzeichnet,
daß der Heizleiter (1) aus weichgeglühtem Cu-Draht oder einer mehradrigen Litze mit PTFF isoliert, auf einem Elastomerband (2) fixiert ist.

5. Lenkrad nach einem der Ansprüche 1 bis 4, dadurch gekennzeichnet,
daß der Heizleiter (1) auf dem Elastomerband (2) durch Schmelzkleber fixiert oder direkt in das Elastomerband dicht unter der Oberfläche eingebettet ist oder auf einem doppelseitigen Klebeband fixiert ist.

6. Lenkrad nach einem der Ansprüche 1 bis 5, dadurch gekennzeichnet,
daß das Elastomerband (2) in der Dicke variabel eingestellt werden kann, daß dadurch der Heizdraht (1) in gewünschter Lage unter der Außenhaut-Oberfläche geführt wird.

7. Lenkrad nach einem der Ansprüche 1 bis 6, dadurch gekennzeichnet,
daß das Elastomerband (2) auf der dem Heizleiter abgewandten Seite selbstklebend ausgerüstet ist.

8. Lenkrad nach einem der Ansprüche 1 bis 7, dadurch gekennzeichnet,
daß das Elastomerband (2) auf dem Lenkradkranz (3) derart aufgeklebt ist, daß die Heizleiterenden (4) (Stromzuführung) an einem Ein-und Ausschalter enden.

9. Lenkrad nach einem der Ansprüche 1 bis 8, dadurch gekennzeichnet, daß die Stromzuführung vom Schalter zu den Heizdrahtenden mit Cu-Litze größeren Querschnitts, mit Silikonelastomer isoliert ausgelegt ist.

10. Lenkrad nach einem der Ansprüche 1 bis 9, dadurch gekennzeichnet, daß der mit dem Heizleiter bzw. dem Elastomerband versehene Lenkradkern (Metall oder Kunststoff) in ein Werkzeug eingelegt und mit dem Außenwerkstoff ummantelt wird.

Fig. 4

Fig. 1

Fig. 3

Fig. 2

( Hupenkontakt )